# EUROPEAN PATENT APPLICATION

(11) **EP 4 564 163 A1**
(43) Date of publication of application: **04.06.2025**
(21) Application number: 23845467.2
(22) Date of filing: 21.07.2023
(51) Int. Cl.: G06F 9/451

(54) **CONTENT DISPLAY METHOD, DEVICE, AND SYSTEM**

(30) Priority: 29.07.2022 CN 202210911094
(71) Applicant: Huawei Technologies Co., Ltd., Shenzhen, Guangdong 518129 (CN)
(72) Inventor: WANG, Zezhi, Shenzhen, Guangdong 518129 (CN); WANG, Xiaodong, Shenzhen, Guangdong 518129 (CN); WANG, Xiaofeng, Shenzhen, Guangdong 518129 (CN); CHEN, Zhibin, Shenzhen, Guangdong 518129 (CN)
(74) Representative: Pfenning, Meinig & Partner mbB
(86) International application number: PCT/CN2023/108713
(87) International publication number: WO 2024/022257

(57) **Abstract**

This application relates to the field of terminal application technologies, and discloses a content display method, a device, and a system, to implement independent display of an interface of a preset window type in an ecosystem convergence scenario, and support a personalized operation on the interface. In solutions, when a guest (Guest) performs multi-interface rendering, the guest may render the interface of the preset window type on an independent virtual screen different from another conventional application interface. The preset window type is a small window like a floating window or a picture-in-picture window. Further, when performing cross-system interface display, a host (Host) displays the interface in a display window that is created for the interface and that is different from another conventional application interface.

## Description

This application claims priority to Chinese Patent Application No. 202210911094.2, filed with the China National Intellectual Property Administration on July 29, 2022 and entitled "CONTENT DISPLAY METHOD, DEVICE, AND SYSTEM", which is incorporated herein by reference in its entirety.

### TECHNICAL FIELD

Embodiments of this application relate to the field of terminal application technologies, and in particular, to a content display method, a device, and a system.

### BACKGROUND

With development of mobile internet technologies and application display technologies, cross-system display is increasingly widely applied in an ecosystem convergence scenario. For example, the ecosystem convergence scenario is a multi-screen collaboration scenario or a simulator scenario (or a container scenario).

In the ecosystem convergence scenario, a guest (Guest) usually renders, on one virtual screen, a plurality of interfaces that are to be displayed in a cross-system manner. When the plurality of interfaces are sent for display, all the interfaces on the virtual screen are usually displayed through one display window of a host (Host). The virtual screen is used by the guest to render an interface, and is usually invisible to a user.

Because the host (Host) displays, through one display window, all interfaces rendered on a same virtual screen, the foregoing conventional cross-system display technology has a problem: If the display window is minimized, all the interfaces displayed in the window are minimized. However, in some cases, for example, when the display window includes a small-window interface (for example, a floating interface or a picture-in-picture interface), the user usually expects that the small-window interface still continues to be displayed when another interface is minimized. When cross-system display is performed based on the foregoing conventional cross-system display technology, a requirement of the user cannot be met.

### SUMMARY

This application provides a content display method, a device, and a system, to implement cross-system independent display of an interface of a preset window type in an ecosystem convergence scenario, and support a personalized operation on the interface.

To achieve the foregoing objectives, the following technical solutions are used in embodiments of this application.

According to a first aspect, a content displaying method is provided. The method is applied to a system including a guest and a host. An operating system of the guest is different from an operating system of the host. The method includes: The guest renders a first interface on a first virtual screen in response to a first operation that indicates to open the first interface in a form of a small window, where the first virtual screen is different from a virtual screen currently used to render an interface of another window type; the guest sends interface data of the first interface to the host; and the host displays the first interface in a first window based on the interface data of the first interface, where the first window is different from a window currently used to display the interface of another window type.

For example, the small window may include but is not limited to a floating window and a picture-in-picture window.

In the solution provided in the first aspect, when the guest has a requirement to display an interface of a preset window type in a cross-system manner through the host, the guest may allocate an independent virtual screen (for example, the first virtual screen) different from the interface of another window type to the interface, and the host may create, for the interface of the preset window type, an independent display window different from the interface of another window type. Based on this, an operation performed by a user on another interface or window does not affect display of the interface of the preset window type. For example, a window of the interface of the preset window type is not affected by an operation such as minimization or location movement of another window. For another example, a window of the interface of the preset window type may alternatively support location movement implemented by the user (including moving out of a display area of another window) or interface size adjustment.

In a possible implementation, the method further includes: The guest requests the host to create a display window for the first interface; and the host creates the first window for the first interface. In a possible implementation, when the guest has a requirement to display the interface of the preset window type in a cross-system manner through the host, the guest may request the host to create the independent display window for the interface of the preset window type. In this way, during subsequent cross-system display, the interface of the preset window type may be displayed through the independent display window different from the interface of another window type, so that an operation performed by the user on the another interface or window does not affect the interface of the preset window type.

In a possible implementation, the method further includes: The host sends an index of the first window to the guest after creating the first window for the first interface, where the interface data that is of the first interface and that is sent by the guest to the host includes the index of the first window. That the host displays the first interface in a first window based on the interface data of the first interface includes: The host displays the first interface in the first window based on the index of the first window that is included in the interface data of the first interface. Based on this, when rendering the interface of the preset window type, the guest may associate the interface with the independent display window created by the host for the interface, so that after receiving the interface data of the interface, the host may display the interface through the independent display window associated with the interface.

In a possible implementation, the guest and the host run on a same device; or the guest and the host run on different devices. The solution provided in this application is applicable to both cross-system and cross-device interface display and cross-system and non-cross-device interface display.

In a possible implementation, the operating system of the host is a Windows^{®} operating system, and the operating system of the guest is an Android^{®} operating system.

In a possible implementation, the method further includes: The host displays, through a second window, a second interface corresponding to a task running on the guest, where the second window is different from the first window; and the host receives the first operation performed by a user on the second interface. In an example, the host may display a plurality of interfaces in a cross-system manner, and the user may trigger, on another interface, an operation event of displaying the first interface in a small window. In addition, the solution provided in this application is applicable to a case in which a plurality of interfaces are displayed in a cross-system manner. When the plurality of interfaces are displayed in a cross-system manner, independent display of interfaces of different window types can be implemented based on the solution provided in this application, to facilitate a targeted operation of the user.

In a possible implementation, the method further includes: The host minimizes the second window in response to an operation of minimizing the second window by the user, and continues displaying the first interface in the first window. Based on the solution provided in this application, because the display window of the first interface is independent of a display window of another interface (for example, the second interface), an operation performed by the user on the another interface or window does not affect display of the interface of the preset window type. For example, the window of the interface of the preset window type is not affected by minimization of another window.

In a possible implementation, the first window is displayed above the second window in a floating manner. The method further includes: In response to an operation of dragging the first window away from the second window by the user, the host displays, based on the drag operation of the user, a dynamic effect that the first window moves away from the second window. Based on the solution provided in this application, because the display window of the first interface is independent of a display window of another interface (for example, the second interface), an operation performed by the user on the another interface or window does not affect display of the interface of the preset window type. For example, the window of the interface of the preset window type may support location movement implemented by the user (including moving out of a display area of another window).

In a possible implementation, the first interface and the second interface belong to a same application or different applications. Whether interfaces in mutually independent windows belong to a same application is not limited in this application.

According to a second aspect, a content display method is provided. The method includes: A guest renders a first interface on a first virtual screen in response to a first operation that indicates to open the first interface in a form of a small window, where the first virtual screen is different from a virtual screen currently used to render an interface of another window type; and the guest sends interface data of the first interface to a host.

In the solution provided in the second aspect, when the guest has a requirement to display an interface of a preset window type in a cross-system manner through the host, the guest may allocate an independent virtual screen (for example, the first virtual screen) different from the interface of another window type to the interface, so that the host may subsequently create, for the interface of the preset window type, an independent display window different from the interface of another window type. Based on this, an operation performed by a user on another interface or window does not affect display of the interface of the preset window type. For example, a window of the interface of the preset window type is not affected by an operation such as minimization or location movement of another window. For another example, a window of the interface of the preset window type may alternatively support location movement implemented by the user (including moving out of a display area of another window) or interface size adjustment.

In a possible implementation, the method further includes: The guest requests the host to create a display window for the first interface. In a possible implementation, when the guest has a requirement to display the interface of the preset window type in a cross-system manner through the host, the guest may request the host to create the independent display window for the interface of the preset window type. In this way, during subsequent cross-system display, the interface of the preset window type may be displayed through the independent display window different from the interface of another window type, so that an operation performed by the user on the another interface or window does not affect the interface of the preset window type.

In a possible implementation, the method further includes: The guest receives an index of a first window from the host, where the first window is the display window created by the host for the first interface; and the guest includes the index of the first window in the interface data of the first interface. Based on this, when rendering the interface of the preset window type, the guest may associate the interface with the independent display window created by the host for the interface, so that after receiving the interface data of the interface, the host may display the interface through the independent display window associated with the interface.

In a possible implementation, the guest and the host run on a same device; or the guest and the host run on different devices. The solution provided in this application is applicable to both cross-system and cross-device interface display and cross-system and non-cross-device interface display.

In a possible implementation, an operating system of the host is a Windows^{®} operating system, and an operating system of the guest is an Android^{®} operating system.

According to a third aspect, a content display method is provided. The method includes: A host creates, for a first interface based on a request of a guest, a first window used to display the first interface, where the first window is different from a window currently used to display an interface of another window type, and a task corresponding to the first interface runs on the guest; and the host displays the first interface in the first window.

In the solution provided in the third aspect, when the host has a requirement to display an interface of a preset window type in a cross-system manner through the host, the host may create, for the interface of the preset window type, an independent display window different from the interface of another window type. Based on this, an operation performed by a user on another interface or window does not affect display of the interface of the preset window type. For example, a window of the interface of the preset window type is not affected by an operation such as minimization or location movement of another window. For another example, a window of the interface of the preset window type may alternatively support location movement implemented by the user (including moving out of a display area of another window) or interface size adjustment.

In a possible implementation, the method further includes: The host sends an index of the first window to the guest after creating the first window for the first interface; and the host receives interface data of the first interface from the guest, where the interface data of the first interface includes the index of the first window. That the host displays the first interface in the first window includes: The host displays the first interface in the first window based on the index of the first window that is included in the interface data of the first interface. Based on this, when rendering the interface of the preset window type, the guest may associate the interface with the independent display window created by the host for the interface, so that after receiving the interface data of the interface, the host may display the interface through the independent display window associated with the interface.

In a possible implementation, the method further includes: The host displays, through a second window, a second interface corresponding to a task running on the guest, where the second window is different from the first window. The solution provided in this application is applicable to a case in which a plurality of interfaces are displayed in a cross-system manner. When the plurality of interfaces are displayed in a cross-system manner, independent display of interfaces of different window types can be implemented based on the solution provided in this application, to facilitate a targeted operation of the user.

In a possible implementation, the method further includes: The host minimizes the second window in response to an operation of minimizing the second window by the user, and continues displaying the first interface in the first window. Based on the solution provided in this application, because the display window of the first interface is independent of a display window of another interface (for example, the second interface), an operation performed by the user on the another interface or window does not affect display of the interface of the preset window type. For example, the window of the interface of the preset window type is not affected by minimization of another window.

In a possible implementation, the first window is displayed above the second window in a floating manner. The method further includes: In response to an operation of dragging the first window away from the second window by the user, the host displays, based on the drag operation of the user, a dynamic effect that the first window moves away from the second window. Based on the solution provided in this application, because the display window of the first interface is independent of a display window of another interface (for example, the second interface), an operation performed by the user on the another interface or window does not affect display of the interface of the preset window type. For example, the window of the interface of the preset window type may support location movement implemented by the user (including moving out of a display area of another window).

In a possible implementation, the first interface and the second interface belong to a same application or different applications. Whether interfaces in mutually independent windows belong to a same application is not limited in this application.

In a possible implementation, the guest and the host run on a same device; or the guest and the host run on different devices. The solution provided in this application is applicable to both cross-system and cross-device interface display and cross-system and non-cross-device interface display.

In a possible implementation, an operating system of the host is a Windows^{®} operating system, and an operating system of the guest is an Android^{®} operating system.

According to a fourth aspect, an electronic device is provided. The electronic device includes: a rendering module, configured to: in response to a first operation that indicates to open a first interface in a form of a small window, render the first interface in a first virtual screen, where the first virtual screen is different from a virtual screen currently used to render an interface of another window type; and an inter-system task component, configured to send interface data of the first interface to a host.

In the solution provided in the second aspect, when the electronic device has a requirement to display an interface of a preset window type in a cross-system manner through the host, the electronic device may allocate an independent virtual screen (for example, the first virtual screen) different from the interface of another window type to the interface, so that the host may subsequently create, for the interface of the preset window type, an independent display window different from the interface of another window type. Based on this, an operation performed by a user on another interface or window does not affect display of the interface of the preset window type. For example, a window of the interface of the preset window type is not affected by an operation such as minimization or location movement of another window. For another example, a window of the interface of the preset window type may alternatively support location movement implemented by the user (including moving out of a display area of another window) or interface size adjustment.

In a possible implementation, the cross-system task component is further configured to request the host to create a display window for the first interface. In a possible implementation, when the electronic device has a requirement to display the interface of the preset window type in a cross-system manner through the host, the electronic device may request the host to create the independent display window for the interface of the preset window type. In this way, during subsequent cross-system display, the interface of the preset window type may be displayed through the independent display window different from the interface of another window type, so that an operation performed by the user on the another interface or window does not affect the interface of the preset window type.

In a possible implementation, the cross-system task component is further configured to receive an index of the first window from the host, where the first window is the display window created by the host for the first interface. The rendering module is further configured to include the index of the first window in the interface data of the first interface. Based on this, when rendering the interface of the preset window type, the electronic device may associate the interface with the independent display window created by the host for the interface, so that after receiving the interface data of the interface, the host may display the interface through the independent display window associated with the interface.

In a possible implementation, the host runs on the electronic device, or the host runs on another electronic device. The solution provided in this application is applicable to both cross-system and cross-device interface display and cross-system and non-cross-device interface display.

In a possible implementation, an operating system of the host is a Windows^{®} operating system, and an operating system of the electronic device is an Android^{®} operating system.

According to a fifth aspect, an electronic device is provided. The electronic device includes: a window management module, configured to create, for a first interface based on a request of a guest, a first window used to display the first interface, where the first window is different from a window currently used to display an interface of another window type, and a task corresponding to the first interface runs on the guest; and a window rendering and sending-for-display module, configured to display the first interface in the first window.

In the solution provided in the fifth aspect, when the electronic device has a requirement to display an interface of a preset window type in a cross-system manner through the electronic device, the electronic device may create, for the interface of the preset window type, an independent display window different from the interface of another window type. Based on this, an operation performed by a user on another interface or window does not affect display of the interface of the preset window type. For example, a window of the interface of the preset window type is not affected by an operation such as minimization or location movement of another window. For another example, a window of the interface of the preset window type may alternatively support location movement implemented by the user (including moving out of a display area of another window) or interface size adjustment.

In a possible implementation, the electronic device further includes: a screen window session management module, configured to: send an index of the first window to the guest; and receive interface data of the first interface from the guest, where the interface data of the first interface includes the index of the first window. That the window rendering and sending-for-display module displays the first interface in the first window includes: The window rendering and sending-for-display module displays the first interface in the first window based on the index of the first window that is included in the interface data of the first interface. Based on this, when rendering the interface of the preset window type, the electronic device may associate the interface with the independent display window created by the host for the interface, so that after receiving the interface data of the interface, the host may display the interface through the independent display window associated with the interface.

In a possible implementation, the window rendering and sending-for-display module is further configured to display, through a second window, a second interface corresponding to a task running on the guest, where the second window is different from the first window. The screen window session management module is further configured to send information about a first operation to the guest based on the first operation that is performed by the user on the second interface and that is received by the electronic device. In an example, the electronic device may display a plurality of interfaces in a cross-system manner, and the user may trigger, on another interface, an operation event of displaying the first interface in a small window. In addition, the solution provided in this application is applicable to a case in which a plurality of interfaces are displayed in a cross-system manner. When the plurality of interfaces are displayed in a cross-system manner, independent display of interfaces of different window types can be implemented based on the solution provided in this application, to facilitate a targeted operation of the user.

In a possible implementation, the window rendering and sending-for-display module is further configured to: minimize the second window in response to an operation of minimizing the second window by the user, and continue displaying the first interface in the first window. Based on the solution provided in this application, because the display window of the first interface is independent of a display window of another interface (for example, the second interface), an operation performed by the user on the another interface or window does not affect display of the interface of the preset window type. For example, the window of the interface of the preset window type is not affected by minimization of another window.

In a possible implementation, the first window is displayed above the second window in a floating manner. The window rendering and sending-for-display module is further configured to: in response to an operation of dragging the first window away from the second window by the user, display, based on the drag operation of the user, a dynamic effect that the first window moves away from the second window. Based on the solution provided in this application, because the display window of the first interface is independent of a display window of another interface (for example, the second interface), an operation performed by the user on the another interface or window does not affect display of the interface of the preset window type. For example, the window of the interface of the preset window type may support location movement implemented by the user (including moving out of a display area of another window).

In a possible implementation, the first interface and the second interface belong to a same application or different applications. Whether interfaces in mutually independent windows belong to a same application is not limited in this application.

In a possible implementation, the guest and the host run on a same device; or the guest and the host run on different devices. The solution provided in this application is applicable to both cross-system and cross-device interface display and cross-system and non-cross-device interface display.

In a possible implementation, an operating system of the host is a Windows^{®} operating system, and an operating system of the guest is an Android^{®} operating system.

According to a sixth aspect, an electronic device is provided. The electronic device includes: a communication port, configured to perform end-to-end (for example, from a guest to a host) communication; a memory, configured to store computer program instructions; and a processor, configured to execute the computer program instructions, to support the electronic device in implementing the method according to any one of the possible implementations of the first aspect or the second aspect.

According to a seventh aspect, an electronic device is provided. The electronic device includes: a communication port, configured to perform end-to-end (for example, from a guest to a host) communication; a memory, configured to store computer program instructions; and a processor, configured to execute the computer program instructions, to support the electronic device in implementing the method according to any one of the possible implementations of the first aspect or the third aspect.

According to an eighth aspect, a content display system is provided. The content display system includes the electronic device according to the sixth aspect and the electronic device according to the seventh aspect. The content display system is configured to implement the method according to any one of the possible implementations of the first aspect.

According to a ninth aspect, a computer-readable storage medium is provided. The computer-readable storage medium stores computer program instructions. When the computer program instructions are executed by a processor, the method according to any one of the possible implementations of the first aspect or the second aspect or the third aspect is implemented.

According to a tenth aspect, a computer program product including instructions is provided. When the computer program product runs on a computer, the computer is enabled to implement the method according to any one of the possible implementations of the first aspect or the second aspect or the third aspect.

According to an eleventh aspect, a chip system is provided. The chip system includes a processing circuit and a storage medium. The storage medium stores computer program instructions. When the computer program instructions are executed by a processor, the method according to any one of the possible implementations of the first aspect or the second aspect or the third aspect is implemented. The chip system may include a chip, or may include a chip and another discrete component.

### BRIEF DESCRIPTION OF DRAWINGS

FIG. 1A is a diagram of displaying a conventional floating interface;
FIG. 1B is a diagram of a hardware structure of an electronic device according to an embodiment of this application;
FIG. 2 is a diagram of a system architecture of a guest according to an embodiment of this application;
FIG. 3 is a diagram of a system architecture of a host according to an embodiment of this application;
FIG. 4A is a diagram of a system architecture for cross-system display of an interface according to an embodiment of this application;
FIG. 4B is a diagram of a working mode of an image buffer queue according to an embodiment of this application;
FIG. 5 is a flowchart of a content display method according to an embodiment of this application;
FIG. 6A and FIG. 6B are a diagram of an interaction process in which a guest renders a first interface according to an embodiment of this application;
FIG. 7 is a diagram of a process in which a host creates a display window for a first interface according to an embodiment of this application;
FIG. 8 is a diagram 1 of a cross-system display effect of an interface according to an embodiment of this application;
FIG. 9 is a diagram 2 of a cross-system display effect of an interface according to an embodiment of this application; and
FIG. 10 is a diagram 3 of a cross-system display effect of an interface according to an embodiment of this application.

### DESCRIPTION OF EMBODIMENTS

The following describes the technical solutions in embodiments of this application with reference to the accompanying drawings in embodiments of this application. In the descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions of embodiments of this application, "a plurality of" means two or more.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the description of embodiments, "a plurality of" means two or more unless otherwise specified.

An embodiment of this application provides a content display method. The method is applied to an ecosystem convergence scenario such as a multi-screen collaboration scenario, a simulator scenario, or a container scenario. A host (Host) on which a second operating system (also referred to as a Host system) is installed displays, independent of another interface, an interface (for example, a small window interface such as a floating window interface or a picture-in-picture interface) of a task running on a guest (Guest) on which a first operating system (namely, a Guest system) is installed. For example, the container scenario is a Huawei^{®} mobile application engine scenario.

For example, in the multi-screen collaboration scenario, the guest (Guest) is a first device, and the host (Host) is a second device. A communication connection is established between the first device and the second device. An embodiment of this application provides a content display method, so that the second device can display, independent of another interface, an interface (for example, a small window interface such as a floating window interface or a picture-in-picture interface) of a task running on the first device.

For example, a wireless transmission protocol may be followed between the first device and the second device, and information is transmitted through a wireless connection transceiver. The wireless transmission protocol may include but is not limited to a Bluetooth (Bluetooth, BT) transmission protocol, a wireless fidelity (wireless fidelity, Wi-Fi) transmission protocol, or the like. For example, the Wi-Fi transmission protocol may be a Wi-Fi P2P transmission protocol. The wireless connection transceiver includes but is not limited to a transceiver such as Bluetooth or Wi-Fi. Information transmission between the first device and the second device is implemented through wireless pairing. The information transmitted between the first device and the second device includes but is not limited to interface data (like a standard video stream and an interface configuration parameter) that needs to be displayed, a control instruction, and the like.

Alternatively, a wired communication connection may be established between the first device and the second device. For example, the wired communication connection is established between the first device and the second device through a video graphics array (video graphics array, VGA), a digital visual interface (digital visual interface, DVI), a high definition multimedia interface (high definition multimedia interface, HDMI), or a data transmission line. Information transmission is implemented between the first device and the second device through the established wired communication connection. A specific connection manner between the first device and the second device is not limited in this application.

Alternatively, for example, in the simulator scenario (or the container scenario), the host (Host) is an electronic device on which the second operating system is installed, and the guest (Guest) is a simulator (or a container) running in the electronic device.

In embodiments of this application, the first operating system is different from the second operating system.

For example, an operating system (namely, the second operating system) of the host (Host) is a Windows^{®} operating system, and an operating system (namely, the first operating system) of the guest (Guest) is an Android^{®} operating system. It is assumed that the host needs to display a plurality of interfaces corresponding to a plurality of tasks running on the guest, and the plurality of interfaces include a floating interface. Based on a conventional cross-system display technology, the guest renders and synthesizes the plurality of interfaces (including the floating interface) into one Android^{®} virtual screen (VirtualDisplay). When displaying the interface, the host displays, through one Windows^{®} display window, the plurality of interfaces rendered on the Android^{®} virtual screen.

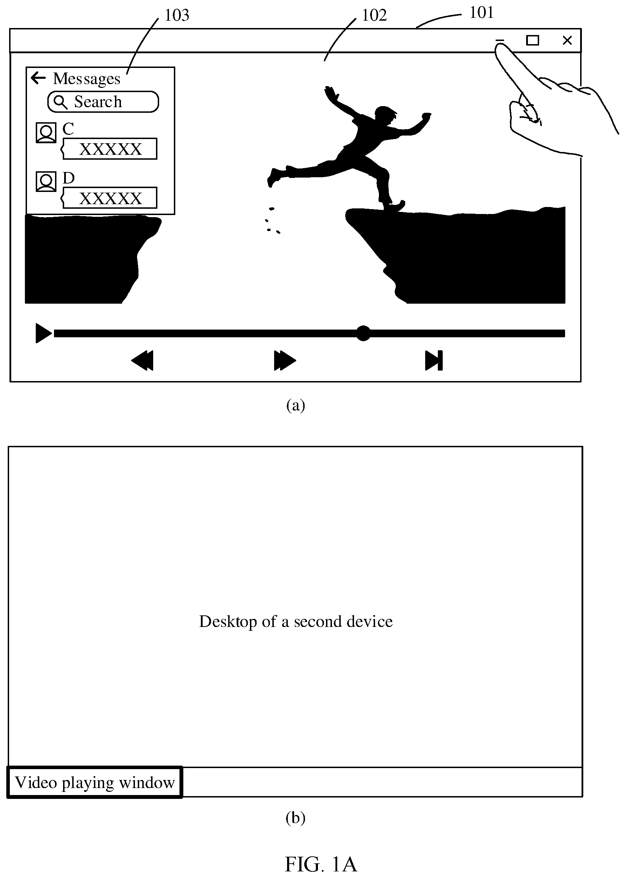

Based on the conventional cross-system display technology, no matter what window type of the interface is, the interface or the window is displayed in the same display window. For example, one of the plurality of interfaces is a floating interface. As shown in (a) in FIG. 1A, it is assumed that the host displays, through a display window 101, a conventional application interface 102 and a floating interface 103 that are provided by the guest. Because both the floating interface 103 and the conventional application interface 102 are displayed in a same window, and a layer (layer) of the floating interface and a layer (layer) of the conventional application interface 102 are synthesized into one layer, the floating interface 103 cannot be separated from the display window 101. If a user minimizes the display window 101, as shown in (b) in FIG. 1A, the floating interface 103 is also minimized synchronously. In addition, a location of the floating interface 103 cannot be independently moved by the user, or an interface size of the floating interface 103 cannot be adjusted.

An advantage of the small window such as the floating window is that the small window can be displayed above another interface or on a desktop in a floating manner, and the small window is not affected by an operation performed by the user on the another interface. However, based on the conventional cross-system display technology, the advantage of floating window display cannot be reflected.

To resolve the foregoing problem existing in the conventional cross-system display technology, an embodiment of this application provides a content display method. A basic principle of the method is as follows: When an electronic device renders an interface provided by a simulator (or a container), for an interface of a preset window type, the electronic device renders the interface on an independent virtual screen that is different from another conventional application interface. The preset window type is a small window interface such as a floating window or a picture-in-picture window. Further, when performing cross-system interface display, the electronic device displays the interface in a display window that is created for the interface and that is different from the another conventional application interface.

The interface provided by the simulator (or the container) in embodiments of this application may be an interface of the preset window type, for example, a small window interface such as a floating window or a picture-in-picture window, or may be a conventional application interface.

The conventional application interface refers to an application interface displayed in a form of a conventional application window. An application may be an application (such as Bluetooth or a gallery) integrated into an operating system of the device, or may be an application (such as a map application, a music application, a video application, an email application, or a shopping application) installed by the user. This is not limited in embodiments of this application. In embodiments of this application, the application window is, for example, a video application window, a navigation application window, or a music application window.

The small window in embodiments of this application is described relative to the conventional application window. The small window such as the floating window and the picture-in-picture window may be displayed on a desktop of a display in a floating manner or displayed on an upper layer of the application window displayed on the display in a floating manner. Any operation (such as an operation on the application window) performed by the user at a lower layer does not affect the display (including a display location and a form) of the small window. In addition, the small window may be independent of another application window, and is not affected by an operation such as minimization or location movement of the another application window. The small window may alternatively support location movement (including moving out of a display area of another application window) by the user, interface size adjustment, or the like.

In embodiments of this application, the electronic device may include but is not limited to a smartphone, a netbook, a tablet computer, a smartwatch, a smart band, a telephone watch, a smart camera, a palmtop computer, a personal computer (personal computer, PC), a personal digital assistant (personal digital assistant, PDA), a portable multimedia player (portable multimedia player, PMP), an augmented reality (augmented reality, AR)/virtual reality (virtual reality, VR) device, a television, a projection device, a motion sensing game console in a humancomputer interaction scenario, or the like. Alternatively, the electronic device may be an electronic device of another type or structure. This is not limited in this application.

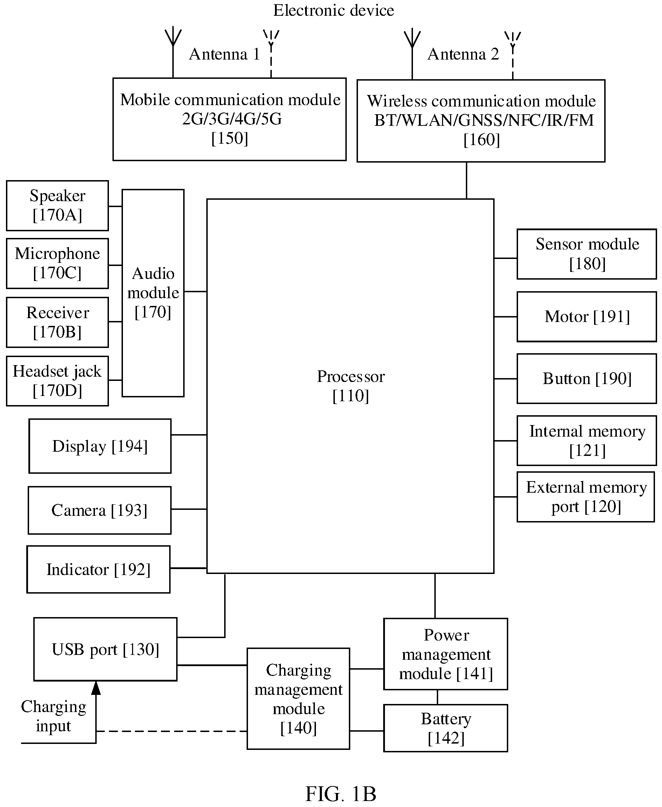

FIG. 1B is a diagram of a hardware structure of an electronic device according to an embodiment of this application.

As shown in FIG. 1B, the electronic device may include a processor 110, a memory (including an external memory port 120 and an internal memory 121), a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, and the like. The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It may be understood that the structure illustrated in this embodiment of the present invention does not constitute a specific limitation on the electronic device. In some other embodiments of this application, the electronic device may include more or fewer components than those shown in the figure, a combination of some components, or splits from some components, or a different component layout. The components shown in the figure may be implemented by using hardware, software, or a combination of software and hardware.

The processor 110 may include one or more processing units. For example, the processor 110 may include an application processor (application processor, AP), a modem processor, a graphics processor (graphics processing unit, GPU), an image signal processor (image signal processor, ISP), a controller, a video codec, a digital signal processor (digital signal processor, DSP), a baseband processor, and/or a neural network processing unit (neural network processing unit, NPU), or the like. Different processing units may be independent components, or may be integrated into one or more processors.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more ports. The ports may include an inter-integrated circuit (inter-integrated circuit, I2C) port, an inter-integrated circuit sound (inter-integrated circuit sound, I2S) port, a pulse code modulation (pulse code modulation, PCM) port, a universal asynchronous receiver/transmitter (universal asynchronous receiver/transmitter, UART) port, a mobile industry processor interface (mobile industry processor interface, MIPI), a general-purpose input/output (general-purpose input/output, GPIO) port, a subscriber identity module (subscriber identity module, SIM) port, a universal serial bus (universal serial bus, USB) port, and/or the like.

The charging management module 140 is configured to receive a charging input from a charger. In some embodiments of wired charging, the charging management module 140 may receive a charging input of a wired charger through the USB port 130. In some embodiments of wireless charging, the charging management module 140 may receive a wireless charging input through a wireless charging coil of the electronic device. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera component 193, the wireless communication module 160, and the like.

A wireless communication function of the electronic device may be implemented via the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna of the electronic device may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device and that includes 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some function modules in the mobile communication module 150 may be disposed in the processor 110. In some embodiments, at least some function modules in the mobile communication module 150 may be disposed in a same device as at least some modules of the processor 110.

The modem processor may include a modulator and a demodulator. The modulator is configured to modulate a to-be-transmitted low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same device as the mobile communication module 150 or another function module.

The wireless communication module 160 may provide a wireless communication solution that is applied to the electronic device and that includes a wireless local area network (wireless local area network, WLAN) (for example, a Wi-Fi network), Bluetooth BT, a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-transmitted signal from the processor 110, perform frequency modulation and amplification on the signal, and convert the signal into an electromagnetic wave for radiation through the antenna 2.

In some embodiments, the antenna 1 and the mobile communication module 150 in the electronic device are coupled, and the antenna 2 and the wireless communication module 160 in the electronic device are coupled, so that the electronic device can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

In embodiment of this application, for the multi-screen collaboration scenario, if the electronic device is the first device, the electronic device may communicate with the second device based on a wireless communication technology via the wireless communication module 160. If the electronic device is the second device, the electronic device may communicate with the first device based on a wireless communication technology via the wireless communication module 160.

The electronic device may implement a display function through the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, and the one or more GPUs execute program instructions to generate or change display information.

In embodiments of this application, the electronic device may draw and render layers of a plurality of interfaces (for example, a small window interface such as a floating interface or a picture-in-picture interface) through the GPU. The layer drawing is mainly used to draw an interface layer (Layer) to be displayed. An essence of layer drawing is pixel filling. The layer rendering is used to adjust a brightness, contrast, and saturation of a drawn layer without changing a status of an original layer.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diodes, QLED), or the like. In some embodiments, the electronic device may include one or N displays 194, where N is a positive integer greater than 1.

In embodiments of this application, the electronic device may display a plurality of windows (for example, including a floating window and an application window) through the display 194, and corresponding interfaces (for example, including a floating interface and a conventional application interface) are separately displayed in the plurality of windows. The plurality of interfaces displayed in the plurality of windows include an interface of an application running on the guest.

The electronic device may implement a photographing function through the ISP, the camera component 193, the video codec, the GPU, the display 194, the application processor, and the like.

The external memory port 120 may be used to connect to an external memory card, for example, a micro SD card, to extend a storage capability of the electronic device. The external memory card communicates with the processor 110 through the external memory port 120, to implement a data storage function. For example, files such as music and videos are stored in the external memory card.

The internal memory 121 may be configured to store computer executable program code. For example, a computer program may include an operating system program and an application. The operating system may include but is not limited to operating systems such as Symbian^{®} (Symbian^{®}), Android^{®} (Android^{®}), Microsoft^{®} Windows^{®}, Apple iOS^{®}, Blackberry^{®} (Blackberry^{®}), and Harmony^{®} (Harmony^{®}) OS. The executable program code includes instructions. The processor 110 runs the instructions stored in the internal memory 121, to perform various function applications and data processing of the terminal device. The internal memory 121 may include a program storage area and a data storage area. The program storage area may store an operating system, an application required by at least one function, and the like. The data storage area may store data (such as interface data) created when the electronic device is used, and the like. In addition, the internal memory 121 may include a high-speed random access memory, or may include a nonvolatile memory, for example, at least one magnetic disk storage device, a flash memory, or a universal flash storage (universal flash storage, UFS). The processor 110 performs various function applications of the electronic device and data processing by running the instructions stored in the internal memory 121 and/or instructions stored in the memory disposed in the processor.

In embodiments of this application, the interface data may include but is not limited to an interface size, an icon, a text, a list, a control, an image frame, and the like that are displayed on the interface, and parameters such as a specific display location, a size, and a color of each icon, text, list, control, image frame, and the like. For details about the interface data, refer to the conventional technology. This is not limited in this application.

The electronic device may implement an audio function such as music playing or recording through the audio module 170, the speaker 170A, the receiver 170B, the microphone 170C, the application processor, and the like. For specific working principles and functions of the audio module 170, the loudspeaker 170A, the receiver 170B, and the microphone 170C, refer to descriptions in the conventional technology.

In addition, for descriptions of hardware such as the button 190, the motor 291, and the indicator 292, refer to the conventional technology. Details are not described again in embodiments of this application.

It may be understood that the structure illustrated in FIG. 1B in this application does not constitute a specific limitation on the electronic device. In some other embodiments of this application, the electronic device may include more or fewer components than those shown in the figure, a combination of some components, or splits from some components, or a different component layout. The components shown in the figure may be implemented by using hardware, software, or a combination of software and hardware.

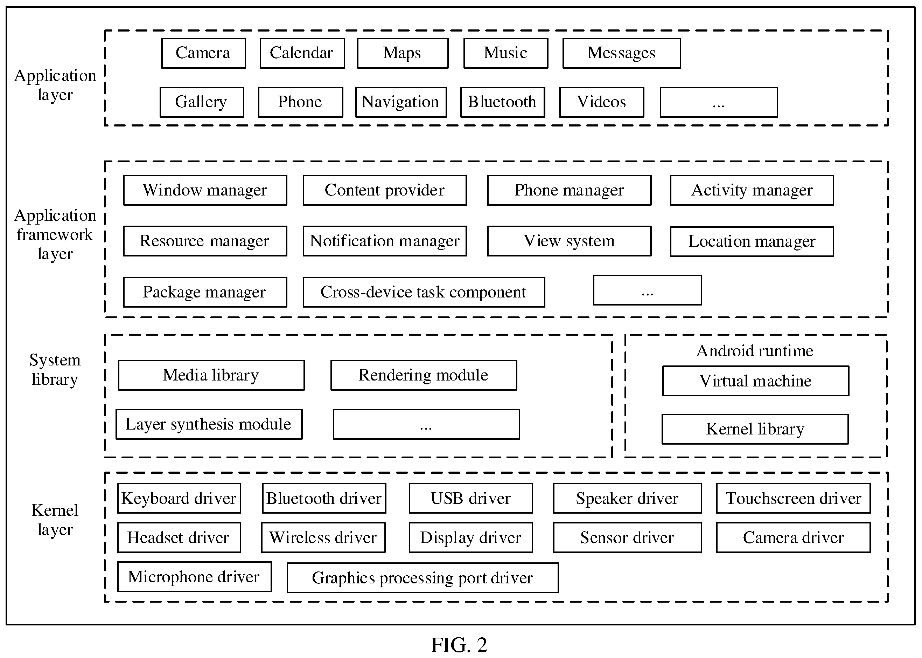

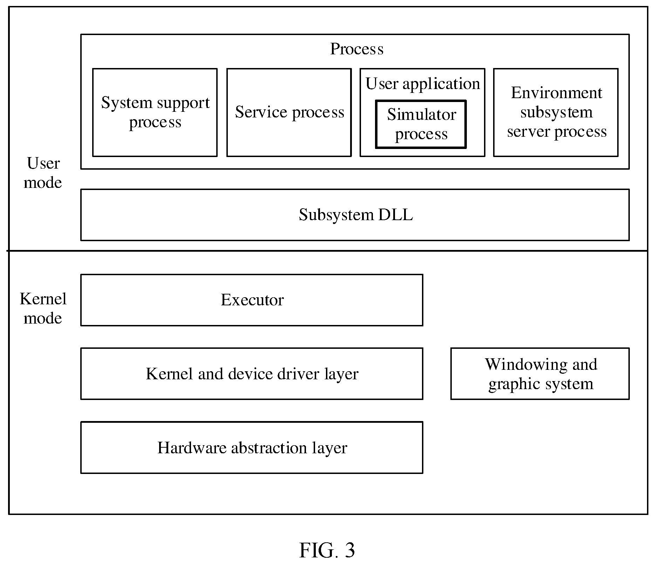

For example, the first operating system is an Android^{®} operating system, and the second operating system is a Windows^{®} operating system. An architecture of the first operating system may be shown in FIG. 2, and an architecture of the second operating system may be shown in FIG. 3.

As shown in FIG. 2, the first operating system may include an application layer, an application framework (framework, FWK) layer, a system library, an Android runtime, and a kernel layer.

The application layer may include a series of application packages, for example, applications such as Camera, Gallery, Calendar, Phone, Maps, Navigation, Bluetooth, Music, Videos, and Messages. For ease of description, an application program is briefly described as an application below. The application may be a native application (for example, an application integrated in the operating system), or may be a third-party application (for example, an application downloaded and installed by the user from an application store). This is not limited in embodiments of this application.

The application framework layer provides an application programming interface (application programming interface, API) and a programming framework for an application at the application layer. As shown in FIG. 2, the application framework layer may include a window manager (window manager), an activity manager (activity manager), a package manager (package manager), a content provider (content provider), a view system (view system), a phone manager (phone manager), a resource manager (resource manager), a notification manager (notification manager), a location manager (location manager), and the like. As shown in FIG. 2, the application framework layer further includes a cross-system task component, configured to implement interdevice communication in an ecosystem convergence scenario, implement a cross-system display feature, and the like.

For example, in a mobile application engine scenario, the cross-system task component such as a mobile application engine component is configured to implement a specific feature of the mobile application engine, communicate with the host, and the like.

The window manager (also referred to as a window management service (window management service, WMS)) carries data and an attribute related to an "interface", and is configured to manage a status related to the "interface", for example, is configured to manage a window program and dispatch an event. The managing a window program includes sequentially outputting to a physical screen or another display device based on a display request of an application under assistance of an application server and the WMS. The dispatching an event refers to dispatching a user event from a keyboard, a physical key, a touchscreen, or a mouse to a corresponding control or window. The window management service may obtain a size of the display, determine whether there is a status bar, perform screen locking, take a screenshot, and the like.

In embodiments of this application, the window managing program is further configured to orderly complete rendering of an interface based on a display request of an application under assistance of an application server and the WMS.

The activity manager (also referred to as an activity management service (activity management service, AMS)) is configured to manage an activity, and is responsible for a work such as startup, switching, and scheduling of a component in a system, and management and scheduling of an application. Specifically, data classes used to store a process (Process), an activity (Activity), and a task (Task) are defined in the AMS. The data class corresponding to the process (Process) may include process file information, memory status information of the process, an activity, a service, and the like included in the process. Information about an activity can be saved in ActivityStack. The ActivityStack is used to schedule activities of an application in a unified manner. The ActivityStack may specifically store information about all running activities (namely, final ArrayList mHistory). For example, a running activity can be saved in new ArrayList. The ActivityStack can also store information about historical activities. It should be noted that an activity does not correspond to an application, but ActivityThread corresponds to an application. Therefore, that Android^{®} allows a plurality of applications to run at the same time actually means that Android^{®} allows a plurality of ActivityThreads to run at the same time.

In Android^{®}, a basic idea of activity scheduling is as follows: Each application process reports to the AMS when starting a new activity or stopping a current activity. The AMS records all application processes internally. When receiving a start or stop report, the AMS updates an internal record and then indicates a corresponding guest process to run or stop a specified activity. The AMS has records of all activities. Therefore, the AMS can schedule these activities and automatically close an activity in a background based on statuses of activities and system memory.

The package manager may be configured to manage a program in an Android^{®} system.

The content provider may be configured to support one application in accessing data of another application (for example, a contact database), or sharing data of the application with another application. The data may include a video, an image, audio, calls that are made and received, a browsing history, a bookmark, a phone book, and the like.

The view system may be configured to construct a display interface of an application. The view system includes a visual control, such as a text box (TextBox) control, a list (List) control, a grid (Grid) control, a button (Button) control, and a web browser control that can be embedded. A display interface may include one or more views. For example, a display interface including a messages notification icon may include a text display view and an image display view.

The phone manager may be configured to provide an obtaining method for accessing a status and information related to communication of a mobile phone, and provide a communication function of the electronic device, for example, call status management (including connection, disconnection, and the like).

The resource manager may be configured to provide access to a non-code resource, for example, access to a local character string, an icon, an image, a graph, a video file, or a layout file (Layoutfile).

The notification manager may be configured to provide a function of displaying customized prompt information in a status bar. The prompt information may be used to convey a notification message, and may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an alert sound is played, the electronic device vibrates, or the indicator light blinks.

The location manager may be configured to provide a method for handling a geographical location-related problem.

The system library and Android runtime include a functional function that needs to be called by the application framework layer. The Android runtime includes a kernel library and a virtual machine. The system library may include a plurality of function modules. For example, as shown in FIG. 2, the system library includes a media library (Media Library), a rendering module, and a layer synthesis module.

The media library supports playing and recording of a plurality of commonly used audio and video formats, static image files, and the like. The media library may support a plurality of audio and video coding formats such as MPEG-4, H.264, MP3, AAC, AMR, JPG, and PNG.

The rendering module is configured to perform layer drawing and rendering on an interface.

The layer synthesis module is configured to synthesize layers of an interface.

The surface manager is configured to manage a display subsystem and provide fusion of 2D and 3D layers for a plurality of applications.

The graphics processing library is configured to implement three-dimensional or twodimensional image processing, image drawing (such as layer drawing), image rendering (such as layer rendering), image synthesis (such as layer synthesis), and the like.

For example, the graphics processing library may be an OpenGL ES (open graphics library (open graphics library, OpenGL) for embedded systems), a skia OpenGL (skiaGL for short), a skia vulkan (skiaVK for short) or the like. This is not limited in this application. For specific descriptions of the graphics processing library, refer to the conventional technology.

The kernel layer is a layer between hardware and software. The kernel layer may include a display driver, an input/output device driver (for example, a keyboard driver, a touchscreen driver, and a microphone driver), a camera driver, an audio driver (for example, a headset driver and a speaker driver), a sensor driver, a wireless driver, a USB driver, a Bluetooth driver, a graphics processing port driver, and the like.

As shown in FIG. 3, the second operating system is a layered architecture, and is mainly divided into a kernel mode and a user mode.

The user mode includes a process such as a subsystem dynamic link library (dynamic link library, DLL), a system support process (system support process), a service process (service process), a user application (user application) process, an environment subsystem server process (environment subsystem server process), and the like shown in FIG. 3.

The subsystem DLL is a system support library that contains two types of functions: a system service distribution stub and an internal support function. The system service distribution stub is mainly used to invoke a system service of an executor (also referred to as a Windows^{®} executor). The internal support function is mainly used by a subsystem, a subsystem DLL, and an exe image file.

The system support process may be a fixed or hard-specified system support process, such as a login process (Winlogon.exe), a session manager process (Smss.exe), a local session manager process (Lsm.exe), a session initialization process (Wininit.exe), a service control manager process (Services.exe), and a local security authentication server process (Lsass.exe).

The service process is a Windows^{®} service.

A user application process includes the following several types of application processes: Windows^{®} 32-bit, Windows^{®} 64-bit, Windows^{®} 3.1 16-bit, MS-DOS 16-bit, POSIX 32-bit, and POSIX 64-bit. For example, in the simulator scenario, a user application process includes a simulator process.

In embodiments of this application, a plurality of tasks in the Android^{®} operating system may run in the simulator process. The simulator process may implement rendering of an interface of a running task, and apply to the Windows^{®} operating system in the user application program process for a display window of the interface. Interface data is sent to the Windows^{®} operating system, so that an objective of displaying, in a cross-system manner through the Windows^{®} operating system, an interface corresponding to the task running in the Android^{®} operating system is implemented.

The environment subsystem server process is used to support an environment of the operating system. The environment herein is a customized part of the operating system presented to a user or programmer.

The kernel mode includes a hardware abstraction layer (hardware abstraction layer, HAL), a kernel and device driver (device driver) layer, an executor, and a windowing and graphic system (windowing and graphic system) shown in FIG. 3.

The hardware abstraction layer enables Windows^{®} to be transplanted to various hardware platforms. The hardware abstraction layer is a loadable kernel module that provides a unified service port for different hardware platforms.

A kernel (namely, a Windows^{®} kernel) at the kernel and device driver layer includes a group of low-level operating system functions, such as thread scheduling, interrupt and exception distribution, and multiprocessor synchronization. A device driver (namely, a device driver program) in the kernel and device driver layer is mainly used for a user thread that initiates an I/O request. The device drivers are classified into a hardware device driver, a file system driver, a file system filter driver, a network redirection driver, a protocol driver, a kernel loss filter driver, and the like.

The executor includes basic operating system services, such as memory management, process and thread management, security management, I/O management, network and crossprocess communication management, power management, configuration management, driver management, and object management.

The windowing and graphic system is mainly configured to implement a graphical user interface (graphical user interface, GUI) function, for example, process a window, generate a user interface control in a window, and draw an interface layer in a window.

Generally, an application on the GUI needs to open a window (namely, the display window). A typical window includes a plurality of components, such as a title bar, a menu bar, and a main display area. The title bar may include an application icon and/or a window title. The main display area is used to place a function control and interface content of the window.

In embodiments of this application, the windowing and graphic system may be configured to support the electronic device in displaying, through the display window, an interface (for example, including a small window interface such as a floating interface or a picture-in-picture interface) of a task running in a cross-system manner. When the electronic device displays a plurality of interfaces through the display window, the small window interface and another conventional application interface are located in different windows.

It may be understood that the architecture shown in FIG. 2 in this application does not constitute a specific limitation on the first operating system, and the architecture shown in FIG. 3 in this application does not constitute a specific limitation on the second operating system. The architecture depends on the specific operating system. For specific software architectures of the Android^{®} operating system and the Windows^{®} operating system, refer to the conventional technology. This application is merely used as an example.

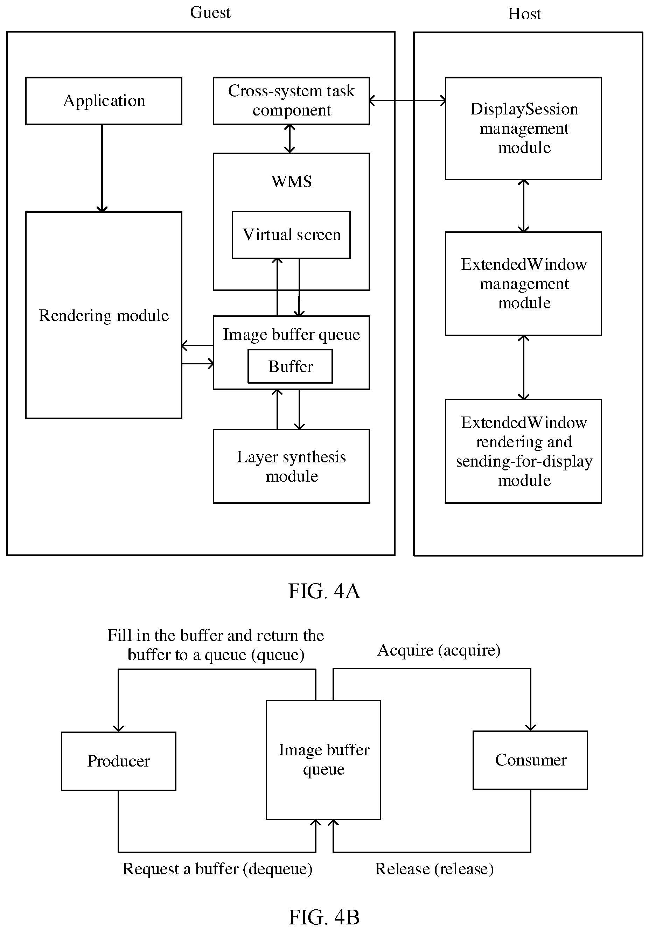

For example, a first operating system (namely, a Guest system) is the Android^{®} operating system shown in FIG. 2, and a second operating system (namely, a Host system) is the Windows^{®} operating system shown in FIG. 3. FIG. 4A is a diagram of a system architecture of cross-system display related to the solutions of this application.

As shown in FIG. 4A, a system of cross-system display includes a guest and a host. A plurality of applications are installed in the guest. The guest includes a cross-system task component (for example, a mobile application engine component in a mobile application engine scenario), a rendering module, a WMS, an image buffer queue (for example, a BufferQueue queue), and a layer synthesis module.

The cross-system task component is configured to: implement inter-system communication (for example, communication with the host) in an ecosystem convergence scenario, implement a cross-system display feature, and the like.

The WMS is configured to: determine a type of an interface, obtain a virtual screen (VirtualDisplay) used to render the interface, obtain an index of a display window used to display the interface, and the like. The WMS is also configured to: manage a window program, and dispatch an operation event.

The rendering module is configured to perform layer drawing and rendering on an interface (for example, a first interface). In embodiments of this application, the rendering module may include but is not limited to GoldfishOpenGL, OpenGL, and the like. The GoldfishOpenGL and the OpenGL can provide different coding classes. For example, the GoldfishOpenGL can provide a coding class for an API used to manage surface drawing, such as EGL, GLES1.1, and GLES2.0. For details about modules related to layer drawing and rendering, refer to the conventional technology.

In an example, a drawing method (for example, a draw method) that may be invoked by an application may transfer an interface (for example, the first interface) drawing instruction to a RenderThread thread at an FWK layer via a drawing component (for example, canvas), and the RenderThread thread renders the interface, includes interface layer drawing and layer rendering.

When performing interface layer drawing, the rendering module actually draws the interface layer in an image buffer queue (for example, a BufferQueue queue). The rendering module may perform layer processing by using the producer-consumer model shown in FIG. 4B.

The image buffer queue (for example, the BufferQueue queue) includes a queue element buffer (Graphic Buffer). The image buffer queue includes a producer and a consumer. As shown in FIG. 4B, the "producer" of the image buffer queue is an application, and the consumer is a rendering module (for example, surfaceFlinger of the rendering module). Generally, each application corresponds to a surface, and each surface corresponds to an image buffer queue. A quantity of graphic buffers in each queue cannot exceed 3.

As shown in FIG. 4B, the producer (for example, a RenderThread thread of an application) may obtain an idle buffer (Graphic Buffer) by requesting (dequeue), fill in the buffer (Graphic Buffer), and return the buffer to the queue (queue). For example, after performing interface layer drawing and rendering in the buffer (Graphic Buffer), the rendering module fills drawn data in the buffer (Graphic Buffer) obtained through requesting (dequeue).

Further, as shown in FIG. 4B, the surfaceFlinger may acquire (acquire) the buffer (Graphic Buffer) from the image buffer queue, to perform subsequent processing, for example, layer synthesis. After layer synthesis is complete, the surfaceFlinger can release the buffer (Graphic Buffer).

In some embodiments, there may generally be three buffers (graphic buffers). For specific descriptions of the image buffer queue (for example, the BufferQueue queue) and the buffer (graphic buffer), refer to the conventional technology. Details are not described herein again.

The layer synthesis module is configured to superimpose and synthesize, based on an appropriate overlapping sequence, a plurality of layers that originally belong to one interface and are separately drawn and rendered, to obtain a complete interface layer. For example, the layer synthesis module may include but is not limited to the surfaceFlinger.

The host includes a screen session management module (a DisplaySession management module shown in FIG. 4A), a window management module (an ExtendedWindow management module shown in FIG. 4A), and a window rendering and sending-for-display module (an ExtendedWindow rendering and sending-for-display module shown in FIG. 4A). The ExtendedWindow management module is configured to create/delete/modify a display window (for example, modify a size), move a location of the display window, set/synthesize a hierarchy of the display window, reverse control, and the like. The ExtendedWindow rendering and sending-for-display module is configured to render the interface and send the interface for display. For example, in the simulator scenario/container scenario, the DisplaySession management module, the ExtendedWindow management module, and the ExtendedWindow rendering and sending-for-display module shown in FIG. 4A may be provided by a simulator/container running on the host.

For example, the ExtendedWindow rendering and sending-for-display module may decode, translate, and render (for example, perform WGL or D3D rendering) interface data from the guest, and then send the interface data for display. For example, the interface data may be an EGL Surface stream or an OpenGL ES Surface stream.

An example in which an operating system of the guest is an Android^{®} operating system and an operating system of the host is a Windows^{®} operating system is used to describe in detail the content display method provided in embodiments of this application with reference to specific embodiments.

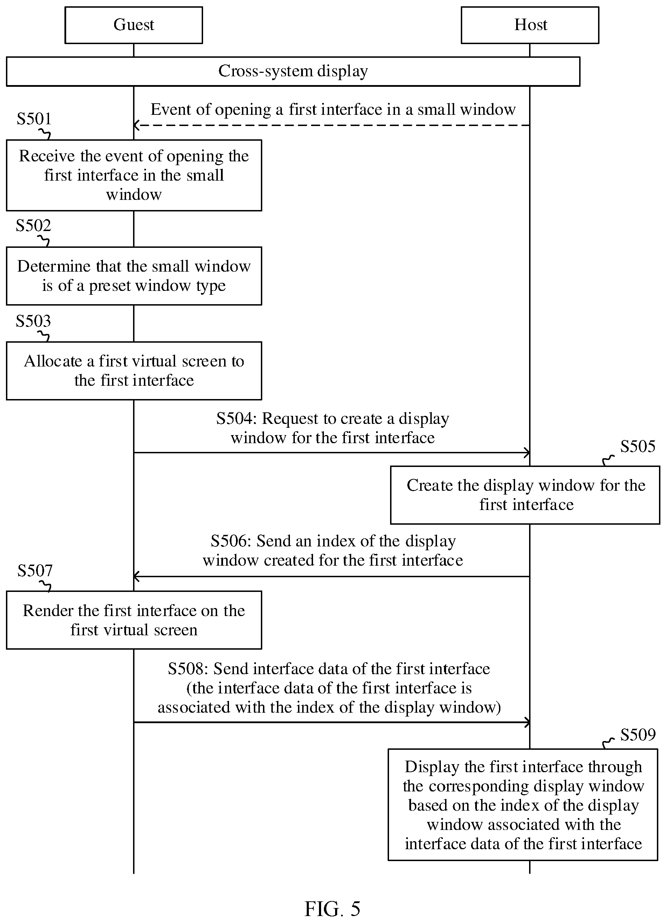

As shown in FIG. 5, a content display method provided in an embodiment of this application may include S501 to S509.

S501: A guest receives an event of opening a first interface in a small window.

For example, the small window may include but is not limited to a floating window and a picture-in-picture window.

A simulator scenario is used as an example. Because both a host and the guest run on a same electronic device, the event of opening the first interface in the small window is, for example, an operation event corresponding to a first operation performed by a user on the electronic device. The host running on the electronic device feeds back the operation event to the guest. The guest responds to the operation event, and returns, to the host for further display, a latest interface that responds to the operation event.

A multi-screen collaboration scenario is used as an example. Because a host and the guest respectively run on different electronic devices, and the host is responsible for cross-system interface display, the event of opening the first interface in the small window is, for example, an operation event corresponding to a first operation performed by a user on an electronic device on which the host is located. The electronic device on which the host is located feeds back the operation event to a device on which the guest is located. The guest responds to the operation event, and returns, to the device on which the host is located for further display, a latest interface that responds to the operation event. Because data exchange between the electronic device on which the host is located and the electronic device on which the guest is located and a response of the electronic device on which the guest is located to the operation event of the user are not perceived by the user, in the multi-screen collaboration scenario, for the user, it seems that an application is installed on the electronic device on which the host is located.

For example, the first operation of the user is a preset operation of the user on a window in which a second interface is located (for example, a touch and hold operation at a preset location of the window in which the second interface is located), an operation of opening, by the user on the second interface, a type icon (for example, a floating window icon or a picture-in-picture icon) or a function option corresponding to the first interface, or an operation of tapping, by the user on the second interface, a control/link corresponding to the first interface. This is not limited in this application.

For example, the host may display the second interface in a second window. The second interface may be an interface that is of a task running on the guest and that is displayed by the host in a cross-system manner, and the second window is different from a first window.

Optionally, a window type of the second window is different from a window type of the first window. For example, the second window is a conventional application window.

Optionally, a window type of the second window is the same as a window type of the first window. For example, both the second window and the first window are floating windows.

Optionally, an application to which the second interface belongs may be the same as or different from an application to which the first interface belongs. This is not specifically limited in embodiments of this application. For example, the second interface may be a video information interface of a video application, and the first interface may be a floating interface of the video application. For another example, the second interface may be a video playing interface of a video application, and the first interface may be an instant messaging interface.

S502: The guest determines that the small window is of a preset window type.

For example, the preset window type may include but is not limited to a window type like a floating window or a picture-in-picture window.

In a possible implementation, after receiving the event of opening the first interface in the small window by the user, the guest attempts to create a window for the first interface based on an application corresponding to the operation event. For example, a window type of the first interface is a small window. According to a conventional processing procedure, the guest attempts to create a small window for the first interface. In this embodiment of this application, logic for creating the window by the guest in an ecosystem convergence scenario is optimized. When attempting to create the window for the first interface, the guest whose logic is optimized determines the window type, to determine the window type corresponding to the first interface.

S503: The guest allocates a first virtual screen to the first interface.

The first virtual screen is used to render an interface of the preset window type. In other words, the first virtual screen is dedicated to rendering the interface of the preset window type.

In a possible example, the first virtual screen is invisible to the user.

In a possible implementation, when the guest determines that the first interface is an interface of the preset window type, the guest may invoke a cross-system task component (for example, a mobile application engine component in a mobile application engine scenario), to obtain a virtual screen used to render the interface (including the first interface) of the preset window type, for example, the first virtual screen.

S504: The guest requests the host to create a display window for the first interface.

The display window that is requested by the guest and that is created by the host for the first interface is used to subsequently display the second interface.

It may be understood that, after the virtual screen used to render the interface of the preset window type is obtained, according to a conventional processing procedure, the guest may create a surface of the first interface. In this embodiment of this application, logic for creating the surface of the interface of the preset window type by the guest in the ecosystem convergence scenario is optimized, and the guest whose logic is optimized applies to the host for creating the display window for the first interface.

S505: The host creates the display window for the first interface.

In a possible implementation, the host may create the corresponding display window (for example, the first window) for the first interface based on the request from the guest for creating the display window for the first interface, and send an index (for example, windowhandle) of the first window to the guest (that is, S506 below).

In an example, when creating the display window for the first interface, the host may first register a window class (RegisterClassEx), and then create the corresponding display window (CreateWindowEx) for the first interface. Each window class has a fixed processing mode for user input, and windows of a same class have a same menu item, a same background, a same icon, a same mouse pointer style, and a same window message processing function. Before the window is created, the application needs to register the window class with a system or use a window class defined by the system (window classes required by some common controls are defined by the system). When the window class is registered, a processing function of a window message needs to be specified. For a specific process of creating the display window, refer to the conventional technology. Details are not described herein again.

For example, the window type of the first interface is a floating window, and the first window created by the host for the first interface may be a floating window.

Alternatively, for example, the window type of the first interface is a picture-in-picture window, and the first window created by the host for the first interface may be a picture-in-picture window.

It should be noted that, in this embodiment of this application, the first window created by the host is only used to display the first interface.

For example, if the user re-initiates an operation event of displaying a third interface in a picture-in-picture window, the guest allocates, to the third interface according to a same procedure, the virtual screen (namely, the first virtual screen) used to render the interface of the preset window type, and requests the host to create a display window (for example, a third window) independent of another window for the third interface.

Alternatively, optionally, if the user re-initiates an operation event of displaying a third interface in a picture-in-picture window, the guest allocates, to the third interface according to a same procedure, a virtual screen (for example, a third virtual screen) used to render an interface of a preset window type, and requests the host to create a display window (for example, a third window) independent of another window for the third interface.

The third window is different from the first window and the second window.

In addition, the display window (for example, the first window) created by the host for the first interface is independent of a window in which an interface (for example, the second interface) of another window type (namely, a non-preset window type) is located. That the first window is independent of the window in which the interface (for example, the second interface) of another window type is located means that the first window is not affected by an operation such as minimization or location movement of the window in which the interface (for example, the second interface) of another window type is located. The first window may alternatively support location movement by the user (including moving out of a display area of another window (for example, the second window)), interface size adjustment, or the like.

S506: The host sends, to the guest, the index of the display window created for the first interface.

The index (for example, windowhandle) of the display window of the first interface is used when the first interface is subsequently rendered and the first interface is displayed.

S507: The guest renders the first interface on the first virtual screen.

The first virtual screen is used to render the interface of the preset window type.

In this embodiment of this application, when rendering the first interface on the first virtual screen, the guest associates a rendered first interface with the index of the display window that is obtained from the host and that is used to display the first interface. In this way, when the rendered first interface is subsequently sent for display, the second interface may display the rendered first interface in the corresponding display window based on the index of the display window associated with the first interface.

In an example, the guest may execute a drawing instruction (for example, a draw instruction), and transfer the drawing instruction to a RenderThread thread at an FWK layer through a canvas, and the RenderThread thread renders the first interface on the first virtual screen.

In an example, that the guest renders the first interface on the first virtual screen may specifically include: The guest obtains related data of the first interface, for example, a layout file (for example, the file may be in an xml format) of the first interface and a setting of an attribute of a control on the interface; the guest renders a plurality of layers of the first interface; the guest buffers, back into an image buffer queue (for example, a BufferQueue queue), a plurality of rendered layers obtained through rendering; the guest extracts the plurality of rendered layers from the image buffer queue (for example, the BufferQueue queue); and the guest synthesizes the plurality of rendered layers to obtain a layer of the first interface.

For a specific interface rendering method and process in this embodiment of this application, refer to the conventional technology.

In an example, that the guest renders the plurality of layers of the first interface may specifically include the following four steps:
(1) The guest obtains a size of each view (View) and/or a size of each view group (ViewGroup) on the first interface based on the layout file (for example, the file may be in the xml format) of the first interface and the setting of the attribute of the control on the interface.
(2) The guest determines a display location of the control on the first interface based on the size of each view (View) and/or the size of each view group (ViewGroup) on the first interface. The control herein may include but is not limited to a text box (TextBox) control used to display a text, a control used to display a picture, a list (List) control used to display a list, a button (Button) control, a grid (Grid) control, a linkable control, and the like.
(3) The guest draws all views of the first interface based on the determined display location of the control on the first interface, to obtain the plurality of layers. For example, the plurality of layers may include one or more of a main display interface layer, a status bar layer, a navigation bar layer, a wallpaper layer, and an initiator icon layer.
(4) The guest performs rasterization processing on the plurality of layers obtained through drawing. Optionally, the guest may further adjust a brightness, contrast, saturation, and the like of the plurality of layers obtained through drawing.
(5) That the guest synthesizes the plurality of rendered layers to obtain the layer of the first interface may include: The guest superimposes and synthesizes, in an appropriate overlapping sequence, the rendered layers obtained from the image buffer queue (for example, the BufferQueue queue), to obtain the complete layer of the first interface.

That the guest performs rasterization processing on the plurality of layers obtained through drawing is a process of mapping points, lines, and triangles of the plurality of layers to pixels on the first virtual screen. The point of the layer is a vertex (vertex) of a control in the layer, the line of the layer is a connection line between two vertices (vertices) in the layer, and the triangle of the layer is a graph enclosed by a plurality of lines in the layer. For a specific process of layer rasterization, refer to the conventional technology. Details are not described herein again.

S508: The guest sends interface data of the first interface to the host, where the interface data of the first interface is associated with the index of the display window.

For example, that the interface data of the first interface is associated with the index of the display window may mean that the interface data of the first interface includes the index of the display window.

The interface data of the first interface may include but is not limited to an interface size, an icon, a text, a list, a control, an image frame, and the like that are displayed on the interface, and parameters such as a specific display location, a size, and a color of each icon, text, list, control, image frame, and the like. In some embodiments, if the first interface is a video playing interface, the interface data of the first interface may include image frame information in a video stream.

S509: The host displays the first interface through the corresponding display window based on the index of the display window associated with the interface data of the first interface.

In a possible implementation, the host may invoke, based on the index of the display window associated with the interface data of the first interface, a corresponding newly added port to display the first interface in the display window (namely, the first window) previously created for the first interface.

For example, the newly added port is an rcPostSurfaceColorBuffer port.

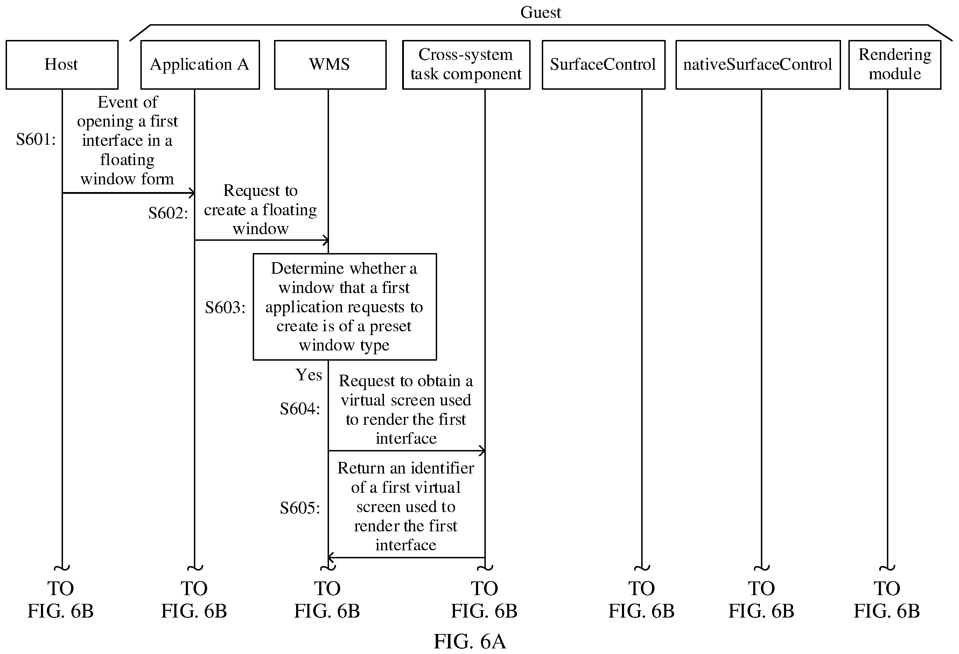

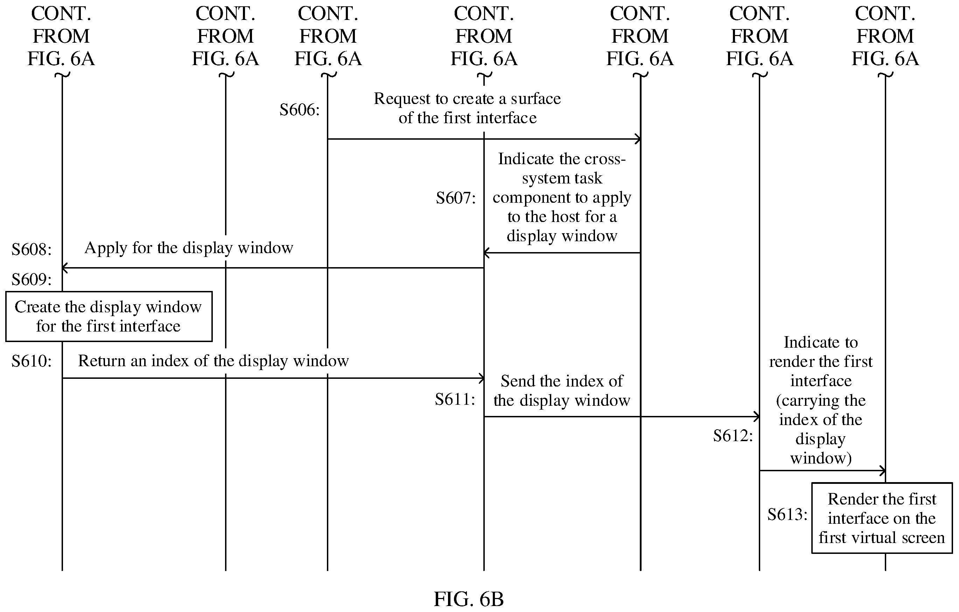

It should be noted that, in the simulator scenario, S501 to S509 shown in FIG. 6 are all performed by a carrier of a second operating system, namely, the simulator. In the multi-screen collaboration scenario, S501 to S504, S507, and S508 shown in FIG. 6 are specifically performed by a first device (namely, the guest), and S505, S506, and S509 are performed by a second device (namely, the host).

It may be understood that, according to the content display method provided in this embodiment of this application, when the guest needs to display the interface of the preset window type in a cross-system manner through the host, the guest may allocate the independent virtual screen (for example, the first virtual screen) to the interface, and request the host to create the independent display window for the interface of the preset window type. When the interface of the preset window type is rendered on the virtual screen (that is, the first virtual screen), the interface is associated with the independent display window created by the host for the interface, so that after receiving the interface data of the interface, the host may display the interface through the independent display window associated with the interface.

In a possible implementation, refer to FIG. 6A and FIG. 6B. FIG. 6A and FIG. 6B show an interaction process in which a guest renders a first interface according to an embodiment of this application by using an example in which a first operating system is an Android^{®} operating system, a first interface is a floating interface, and the first interface corresponds to an application A.

S601 shown in FIG. 6A is used as an example of an implementation of S501 shown in FIG. 5. S602 and S603 shown in FIG. 6A are used as an example of an implementation of S502 shown in FIG. 5. S604 and S605 shown in FIG. 6A are used as an example of an implementation of S503 shown in FIG. 5. S606 to S608 shown in FIG. 6B are used as an example of an implementation of S504 shown in FIG. 5. S609 shown in FIG. 6B is used as an example of an implementation of S505 shown in FIG. 5. S610 shown in FIG. 6B is used as an example of an implementation of S506 shown in FIG. 5. S611 to S613 shown in FIG. 6B are used as an example of an implementation of S507 shown in FIG. 5.

Specifically, as shown in S601 in FIG. 6A, a host may send, to the guest, an event that is received by the host and that is of opening the first interface by the user in a form of a floating window. Because the first interface corresponds to the application A, after receiving the event of opening the first interface by the user in the floating window form, the guest dispatches the operation event to a corresponding application based on an application corresponding to the operation event, that is, the application A shown in FIG. 6A and FIG. 6B.

For example, as shown in S602 in FIG. 6A, in response to the operation event of opening the first interface in the floating window form, the application A requests a WMS to create a floating window. For example, the application A may invoke, based on a specific intent of the operation event (namely, an intent of opening the first interface in the floating window form), a floating window port to request the WMS at an FWK layer to create the floating window. For example, the floating window port is an addview port. For example, when requesting the WMS to create the floating window, the application A may further carry related information of the first interface, for example, a width and a height of the interface.

In this embodiment of this application, logic of creating a window by the WMS is optimized. After the logic is optimized, when receiving a window creation request, the WMS determines a window type. Based on this, as shown in S603 in FIG. 6A, after receiving the floating window creation request from the application A, the WMS determines whether the window that the application A requests to create is of a preset window type.

If the window that the application A requests to create is of the preset window type, as shown in S604 in FIG. 6A, the WMS requests, from the cross-system task component of the guest, to obtain the virtual screen used to render the first interface. As shown in S605 in FIG. 6A, the cross-system task component of the guest returns, to the WMS, an identifier of the virtual screen that is used to render the first interface, for example, an identifier of the first virtual screen.

Further, as shown in S606 in FIG. 6B, the WMS requests SurfaceControl to create a surface of the first interface. The SurfaceControl is an object created by the WMS. In this embodiment of this application, logic of creating the surface of the preset window type by the SurfaceControl of the guest in an ecosystem convergence scenario is optimized. Therefore, as shown in S607 in FIG. 6B, when receiving a request from the WMS for creating the surface of the first interface, the SurfaceControl with optimized logic may indicate the cross-system task component of the guest to apply to the host for the display window. The display window is used to display the first interface. As shown in S608 in FIG. 6B, the cross-system task component of the guest applies to the host for the display window based on the indication of the SurfaceControl, where a request message carries a type of the requested display window, for example, a floating window or a picture-in-picture window.

Correspondingly, after receiving, from the guest, the request for creating the display window used to display the first interface, as shown in S609 in FIG. 6B, the host creates the display window for the first interface. In addition, as shown in S610 in FIG. 6B, the host returns an index of the display window (namely, the display window used to display the first interface) to the cross-system task component of the guest.

Correspondingly, as shown in S611 in FIG. 6B, after receiving the index that is of the display window and that is used to display the first interface and that is returned by the host, the cross-system task component of the guest sends the index (for example, windowhandle) of the display window to SurfaceControl at a native layer (namely, nativeSurfaceControl shown in FIG. 6A and FIG. 6B).

For example, in this embodiment of this application, a port invoking capability of the cross-system task component of the guest in the ecosystem convergence scenario is optimized, and the optimized cross-system task component may invoke a newly added port to send the index of the display window to the nativeSurfaceControl. The newly added port may be used to write the index of the display window to the nativeSurfaceControl.

Further, as shown in S612 in FIG. 6B, when indicating the rendering module to render the first interface on the first virtual screen, the nativeSurfaceControl may send the index of the display window to the rendering module for subsequent rendering and sending-for-display of the first interface. Further, as shown in S613 in FIG. 6B, the rendering module renders the first interface on the first virtual screen based on the indication of the nativeSurfaceControl. The first interface obtained after rendering is associated with the index of the display window. In an example, when rendering the first interface on the first virtual screen based on the indication of the nativeSurfaceControl, the rendering module may associate the first interface with the index of the display window.

In an example, the rendering module of the guest in this embodiment of this application may include but is not limited to GoldfishOpenGL, OpenGL, and the like. For descriptions of an interface rendering-related module and a rendering process, refer to the conventional technology.

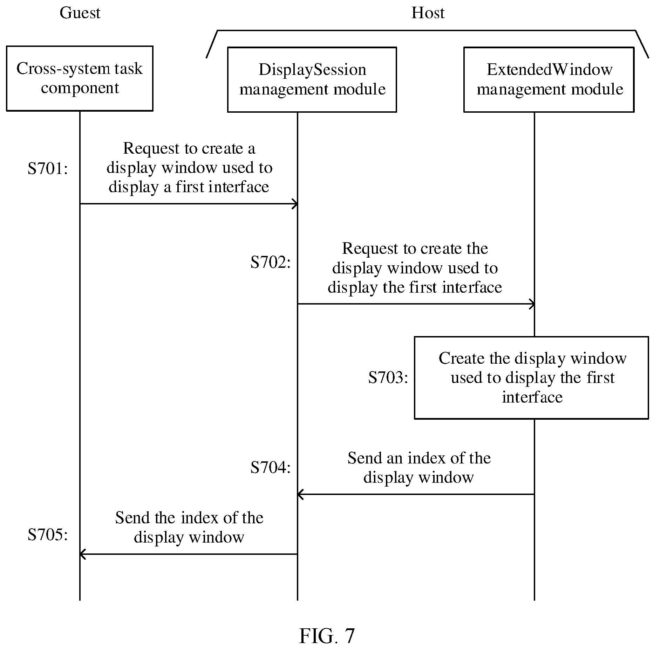

In an example, refer to FIG. 7. FIG. 7 is a diagram of a process in which a guest creates a display window for a first interface according to an embodiment of this application. S701 shown in FIG. 7 may be used as an example of an implementation of S609 shown in FIG. 6B. S702 to S704 shown in FIG. 7 may be used as an example of an implementation of S610 shown in FIG. 6B. S705 shown in FIG. 7 may be used as an example of an implementation of S611 shown in FIG. 6B.

Specifically, as shown in S701 in FIG. 7, a guest may request, through a cross-system task component, the host to create the display window used to display the first interface. Correspondingly, after the request for creating the display window used to display the first interface is received from the guest, as shown in S702 in FIG. 7, a DisplaySession management module of the host requests an ExtendedWindow management module to create the display window used to display the first interface. As shown in S703 in FIG. 7, the ExtendedWindow management module of the host creates, based on the request of the DisplaySession management module, the display window (for example, a first window) used to display the first interface. As shown in S704 in FIG. 7, the ExtendedWindow management module of the host sends an index (for example, windowhandle) of the display window (namely, the first window) to the DisplaySession management module.

Further, as shown in S705 in FIG. 7, the DisplaySession management module of the host sends the index of the display window (namely, the first window) to the guest (the cross-system task component shown in FIG. 7), so that the guest subsequently renders the first interface based on the index of the display window (namely, the first window).

It may be understood that, according to the content display method provided in embodiments of this application, a guest renders an interface of a preset window type on a virtual screen different from an interface of another window type, so that when the interface is displayed in a cross-system manner, the interface of the preset window type may be displayed in an independent window independent of the interface of another window type. An operation performed by a user on another interface or window does not affect display of the interface of the preset window type. For example, a window of the interface of the preset window type is not affected by an operation such as minimization or location movement of another window. For another example, a window of the interface of the preset window type may alternatively support location movement implemented by the user (including moving out of a display area of another window) or interface size adjustment.

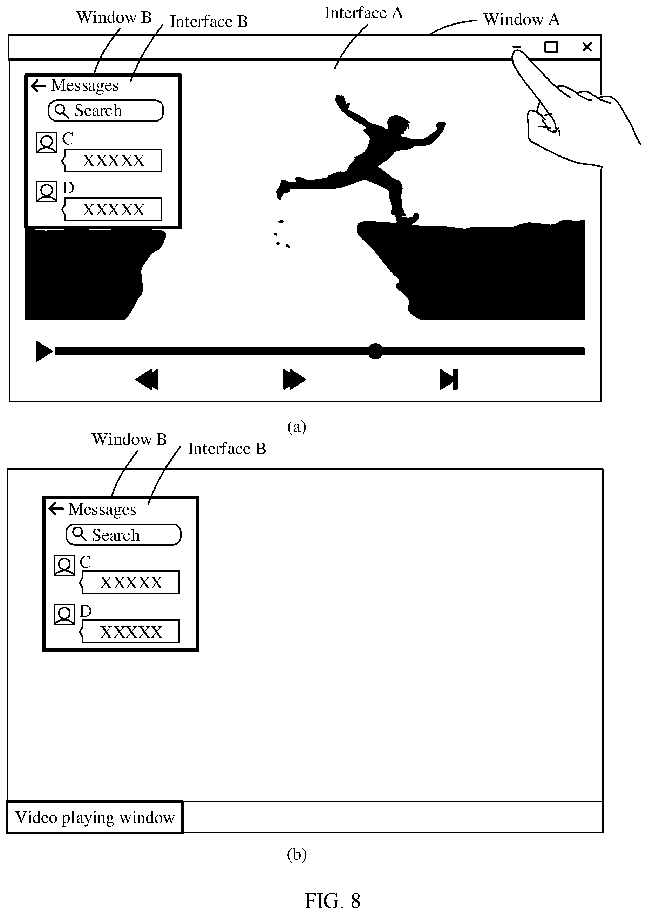

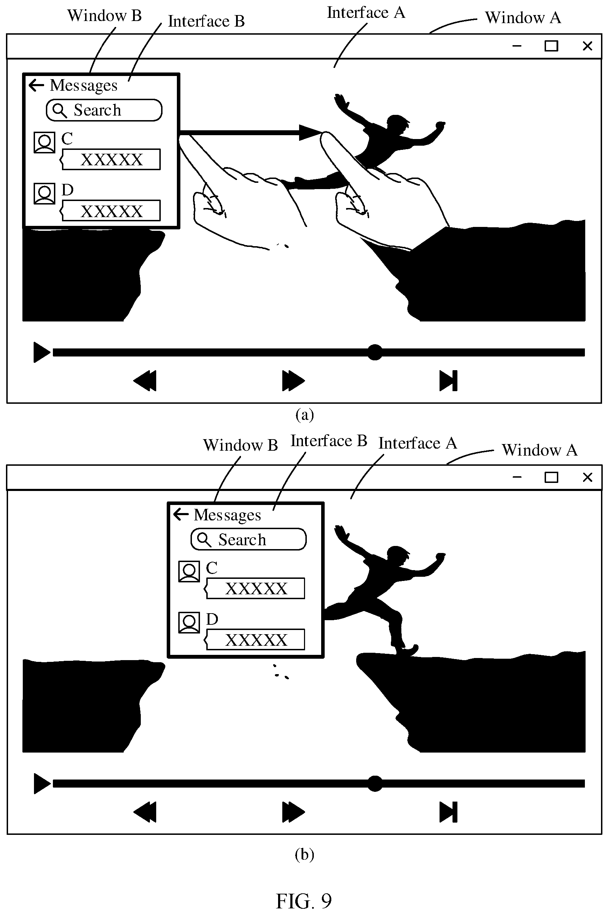

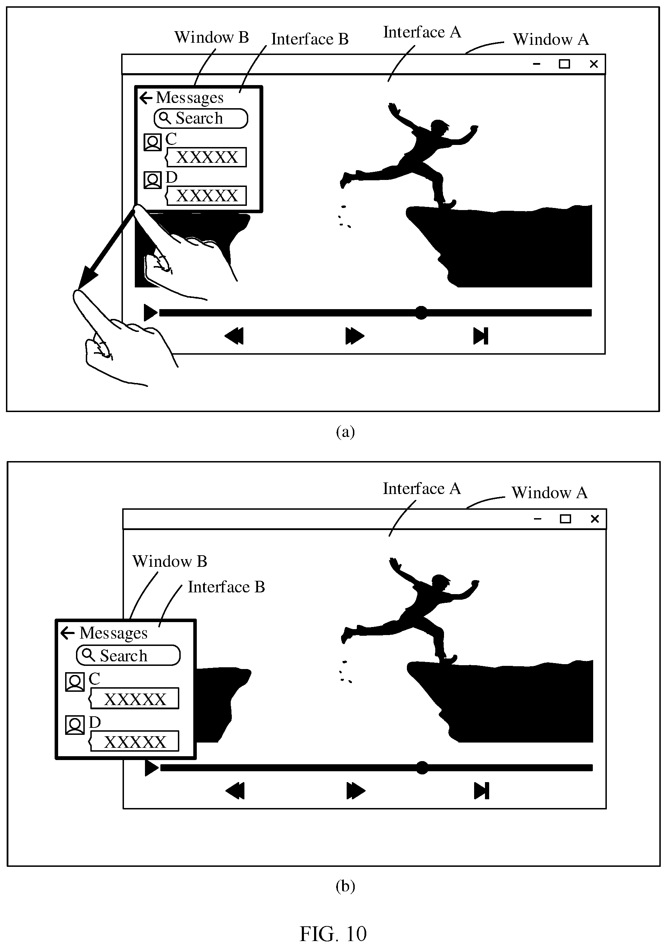

For example, the preset window type is a floating window. It is assumed that a device displays, through a window A, a conventional application interface A from another device, and displays, through a window B, a floating interface B from the another device. As shown in FIG. 8, because the floating interface B is displayed in the independent window B independent of the conventional application interface A, as shown in (a) in FIG. 8 and (b) in FIG. 8, a minimization operation performed by the user on the window A does not affect display of the floating interface B in the window B. As shown in FIG. 9, because the floating interface B is displayed in the independent window B independent of the conventional application interface A, as shown in (a) in FIG. 9 and (b) in FIG. 9, the window B may further support random location movement of the floating interface B by the user. In some embodiments, for example, when both the window A and the window B shown in FIG. 10 are not displayed in full screen on a display of the device, as shown in (a) in FIG. 10 and (b) in FIG. 10, the window B may further support the user to move the window B from an upper layer of a location of the window A to a display area outside the window A.

It should be understood that the solutions in embodiments of this application may be appropriately combined for use, and explanations or descriptions of terms in the embodiments may be mutually referenced or explained in the embodiments. This is not limited.

It should be further understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

It may be understood that, to implement functions of any one of the foregoing embodiments, the electronic device includes a corresponding hardware structure and/or software module for performing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the electronic device may be divided into functional modules. For example, each functional module corresponding to each function may be obtained through division, or two or more functions may be integrated into one processing module. The integrated module may be implemented in a form of hardware, or may be implemented in a form of a software function module. It should be noted that, in embodiments of this application, module division is an example, and is merely a logical function division. In actual implementation, another division manner may be used.

It should be further understood that each module in the electronic device may be implemented in a form of software and/or hardware. This is not specifically limited herein. In other words, the electronic device is presented in a form of a functional module. The "module" herein may be an application-specific integrated circuit ASIC, a circuit, a processor that executes one or more software or firmware programs and a memory, an integrated logic circuit, and/or another component that can provide the foregoing functions.

In an optional manner, when software is used for implementing data transmission, the data transmission may be completely or partially implemented in a form of a computer program product. The computer program product includes one or more computer instructions. When the computer program instructions are loaded and executed on a computer, all or some of the processes or functions in embodiments of this application are implemented. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a digital video disk (digital video disk, DVD)), a semiconductor medium (for example, a solid-state drive solid state disk (SSD)), or the like.

Method or algorithm steps described in combination with embodiments of this application may be implemented by hardware, or may be implemented by a processor by executing software instructions. The software instruction may include a corresponding software module. The software module may be located in a RAM memory, a flash memory, a ROM memory, an EPROM memory, an EEPROM memory, a register, a hard disk, a removable hard disk, a CD-ROM, or a storage medium of any other form well-known in the art. For example, a storage medium is coupled to a processor, so that the processor can read information from the storage medium and write information into the storage medium. Certainly, the storage medium may be a component of the processor. The processor and the storage medium may be located in an ASIC. In addition, the ASIC may be located in an electronic device. Certainly, the processor and the storage medium may alternatively exist in the electronic device as discrete components.

Based on the foregoing descriptions of the implementations, a person skilled in the art may clearly understand that for the purpose of convenient and brief descriptions, division into the foregoing function modules is merely used as an example for description. During actual application, the foregoing functions can be allocated to different function modules for implementation based on a requirement, that is, an inner structure of an apparatus is divided into different function modules to implement all or some of the functions described above.

## Claims

1. A content display method, wherein the method is applied to a system comprising a guest and a host, an operating system of the guest is different from an operating system of the host, and the method comprises:
rendering, by the guest, a first interface on a first virtual screen in response to a first operation, wherein the first virtual screen is different from a virtual screen currently used to render an interface of another window type, and the first operation indicates to open the first interface in a small window form;
sending, by the guest, interface data of the first interface to the host; and
displaying, by the host, the first interface in a first window based on the interface data of the first interface, wherein the first window is different from a window currently used to display the interface of another window type.

2. The method according to claim 1, wherein the method further comprises:
requesting, by the guest, the host to create a display window for the first interface; and
creating, by the host, the first window for the first interface.

3. The method according to claim 2, wherein the interface data of the first interface comprises an index of the first window, and the index of the first window is sent by the host to the guest after the host creates the first window for the first interface; and
the displaying, by the host, the first interface in a first window based on the interface data of the first interface comprises:
displaying, by the host, the first interface in the first window based on the index of the first window that is comprised in the interface data of the first interface.

4. The method according to any one of claims 1 to 3, wherein
the guest and the host run on a same device; or
the guest and the host run on different devices.

5. The method according to claim 4, wherein
the operating system of the host is a Windows^{®} operating system, and the operating system of the guest is an Android^{®} operating system.

6. The method according to any one of claims 1 to 5, wherein the method further comprises:
displaying, by the host through a second window, a second interface corresponding to a task running on the guest, wherein the second window is different from the first window; and
receiving, by the host, the first operation performed by a user on the second interface.

7. The method according to claim 6, wherein the method further comprises:
minimizing, by the host, the second window in response to an operation of minimizing the second window by the user, and continuing displaying the first interface in the first window.

8. The method according to claim 6, wherein the first window is displayed above the second window in a floating manner, and the method further comprises:
in response to an operation of dragging the first window away from the second window by the user, displaying, by the host based on the drag operation of the user, a dynamic effect that the first window moves away from the second window.

9. The method according to any one of claims 6 to 8, wherein the first interface and the second interface belong to a same application or different applications.

10. A content display method, wherein the method comprises:
rendering, by a guest, a first interface on a first virtual screen in response to a first operation, wherein the first virtual screen is different from a virtual screen currently used to render an interface of another window type, and the first operation indicates to open the first interface in a small window form; and
sending, by the guest, interface data of the first interface to a host.

11. The method according to claim 10, wherein the method further comprises:
requesting, by the guest, the host to create a display window for the first interface.

12. The method according to claim 11, wherein the method further comprises:
receiving, by the guest, an index of a first window from the host, wherein the first window is the display window created by the host for the first interface; and
comprising, by the guest, the index of the first window in the interface data of the first interface.

13. The method according to any one of claims 10 to 12, wherein
the guest and the host run on a same device; or
the guest and the host run on different devices.

14. The method according to claim 13, wherein an operating system of the host is a Windows^{®} operating system, and an operating system of the guest is an Android^{®} operating system.

15. A content display method, wherein the method comprises:
creating, by a host for a first interface based on a request of a guest, a first window used to display the first interface, wherein the first window is different from a window currently used to display an interface of another window type, and a task corresponding to the first interface runs on the guest; and
displaying, by the host, the first interface in the first window.

16. The method according to claim 15, wherein the method further comprises:
sending, by the host, an index of the first window to the guest; and
receiving, by the host, interface data of the first interface from the guest, wherein the interface data of the first interface comprises the index of the first window; and
the displaying, by the host, the first interface in the first window comprises:
displaying, by the host, the first interface in the first window based on the index of the first window that is comprised in the interface data of the first interface.

17. The method according to claim 15 or 16, wherein the method further comprises: displaying, by the host through a second window, a second interface corresponding to a task running on the guest, wherein the second window is different from the first window.

18. The method according to claim 17, wherein the method further comprises:
minimizing, by the host, the second window in response to an operation of minimizing the second window by a user, and continuing displaying the first interface in the first window.

19. The method according to claim 17, wherein the first window is displayed above the second window in a floating manner, and the method further comprises:
in response to an operation of dragging the first window away from the second window by a user, displaying, by the host based on the drag operation of the user, a dynamic effect that the first window moves away from the second window.

20. The method according to any one of claims 17 to 19, wherein the first interface and the second interface belong to a same application or different applications.

21. The method according to any one of claims 15 to 20, wherein
the guest and the host run on a same device; or
the guest and the host run on different devices.

22. The method according to claim 21, wherein an operating system of the host is a Windows^{®} operating system, and an operating system of the guest is an Android^{®} operating system.

23. An electronic device, wherein the electronic device comprises:
a communication port, configured to communicate with another electronic device;
a memory, configured to store computer program instructions; and
a processor, configured to execute the computer program instructions, to support the electronic device in implementing the method according to any one of claims 10 to 14.

24. An electronic device, wherein the electronic device comprises:
a communication port, configured to perform end-to-end communication;
a memory, configured to store computer program instructions; and
a processor, configured to execute the computer program instructions, to support the electronic device in implementing the method according to any one of claims 15 to 22.

25. A content display system, wherein the content display system comprises:
the electronic device according to claim 23 and the electronic device according to claim 24; and
the content display system is configured to implement the method according to any one of claims 1 to 9.

26. A computer-readable storage medium, wherein the computer-readable storage medium stores computer program instructions, and when the computer program instructions are executed by a processing circuit, the method according to any one of claims 10 to 14 or the method according to any one of claims 15 to 22 is implemented.

27. A computer program product comprising instructions, wherein when the computer program product runs on a computer, the computer is enabled to perform the method according to any one of claims 10 to 14 or the method according to any one of claims 15 to 22.

28. A chip system, wherein the chip system comprises a processing circuit and a storage medium, the storage medium stores computer program instructions, and when the computer program instructions are executed by the processing circuit, the method according to any one of claims 10 to 14 or the method according to any one of claims 15 to 22 is implemented.
